# EUROPÄISCHE PATENTSCHRIFT

(11) **EP 2 614 041 B1**
(45) Veröffentlichungstag und Bekanntmachung des Hinweises auf die Patenterteilung: **29.08.2018**
(21) Anmeldenummer: 11761033.7
(22) Anmeldetag: 06.09.2011
(51) Int. Cl.: C04B 41/85, C09D 1/04, C23C 26/00

(54) **VERFAHREN ZUM HERSTELLEN EINER EXTREM HOCHTEMPERATURFESTEN BESCHICHTUNG AUF EINEM EXTREM HOCHTEMPERATURFESTEN BAUTEIL**
PROCESS FOR PRODUCING AN EXTREMELY HIGH-TEHMPERATURE RESISTANT COATING ON AN EXTREMELY HIGH-TEMPERATURE RESISTANT COMPONENT
PROCÉDÉ DE FABRICATION D'UN REVÊTEMENT EXTRÉMEMENT RÉSISTANT AUX HAUTES TEMPÉRATURES SUR UN ÉLÉMENT EXTRÉMEMENT RÉSISTANT AUX HAUTES TEMPÉRATURES

(30) Priorität: 08.09.2010 DE 102010040430
(43) Veröffentlichungstag der Anmeldung: 17.07.2013
(73) Patentinhaber: Ewald Dörken AG, 58313 Herdecke (DE)
(72) Erfinder: DORNBUSCH, Michael, 40627 Düsseldorf (DE); HINZ, Hans Detlev, 58239 Schwerte (DE)
(74) Vertreter: Von Rohr Patentanwälte Partnerschaft mbB
(86) Internationale Anmeldenummer: PCT/EP2011/065376
(87) Internationale Veröffentlichungsnummer: WO 2012/032036

(56) Entgegenhaltungen:
- US-A- 4 465 777
- US-A- 4 559 270
- US-A- 5 681 383
- US-A- 6 165 923
- US-A1- 2005 153 125
- US-A1- 2009 081 106
- US-A1- 2010 151 257
- CHEMICAL ABSTRACTS, Bd. 113, Nr. 16, 137433Q, 15. Oktober 1990 (1990-10-15), XP000192569, ISSN: 0009-2258 & CN 1 035 121 A (LUOYANG REFRACTORY MAT [CN] LUOYANG REFRACTORY INST MINIST [CN]) 30. August 1989 (1989-08-30)
- CHEMICAL ABSTRACTS, Bd. 96, Nr. 8, 56870H, 22. Februar 1982 (1982-02-22), XP000190875, ISSN: 0009-2258 & JP 56 104786 A (MEKANIKARU CARBON KOGYO KK) 20. August 1981 (1981-08-20)
- DATABASE WPI Week 198341 Thomson Scientific, London, GB; AN 1983-787896 XP002663678, & SU 980 920 A (SHATALOV A I) 15. Dezember 1982 (1982-12-15)
- DATABASE WPI Week 199205 Thomson Scientific, London, GB; AN 1992-039162 XP002663679, & SU 1 629 284 A (NIZHNEDNEPR PIPE RO) 23. Februar 1991 (1991-02-23)

## Beschreibung

Die Erfindung betrifft ein Verfahren zum Herstellen einer extrem hochfesten Beschichtung.

Extrem hochtemperaturfeste Bauteile, die während des Gebrauchs Temperaturen von über 800 °C, typischerweise von mehr als 1.000 °C bis zu 2.000 °C ausgesetzt sind, sind oft gleichzeitig einer aggressiven Umgebung ausgesetzt. Aggressive Gase oder Niederschläge verändern auf Dauer die Qualität der Bauteile, insbesondere deren Oberflächeneigenschaften. Dies gilt beispielsweise für die Auskleidung von Öfen oder Verbrennungseinrichtungen, für Leitungen oder Förderanlagen, für Turbinen und andere thermisch belastete Bauteile, die auf Dauer in Folge der Kontamination mit Fremdionen beeinträchtigt werden.

Die Eigenschaften der Oberfläche von extrem hochtemperaturfesten Substraten oder Bauteilen wird ebenfalls beeinflusst, wenn unter dem Einfluss der Umgebung im Betrieb Ionen aus der Oberfläche gelöst werden, so dass mit großem Überschuss dieser Ionen gearbeitet werden muss, um auf Dauer eine ausreichende Konzentration von Ionen zur Verfügung zu stellen. Typisches Beispiel hier sind Katalysatoren, die z. B. bei der Abgasreinigung eingesetzt werden.

Aufgrund der hohen Betriebstemperaturen von über 1.000 °C bis zu 2.000 °C hat man bisher in der Regel eine Beschichtung der extrem hochtemperaturfesten Bauteile aus Legierungen oder keramischen Beschichtungen aufgetragen, um die Oberflächen vor Veränderungen zu schützen. Typische Beispiele geben die US 6,221,181 (ABB Research Ltd.) und die US 2008/0 261 069 (Hitachi Ltd.). Diese Beschichtungen sind teuer, müssen auf das Bauteil abgestimmt werden und sind aufgrund der Stärke der Beschichtung nicht für alle Anwendungen geeignet.

Es gibt auch einzelne Beschreibungen, z. B. in der US 2004/0 180 223 (Tokyo Ohka Kobyo Co.) von Beschichtungen mit Siloxanen mit organischen Anteilen, die bei Temperaturen von bis zu 750 °C eingebrannt werden. Allerdings sind die beschichteten Bauteile selbst nicht für den Einsatz bei hohen Temperaturen von über 800 °C gedacht. Hohe Temperaturen werden nur für den Beschichtungsvorgang erreicht. Es wird darauf hingewiesen, dass solche Beschichtungen mit organischen Anteilen nur unter inerter Atmosphäre hergestellt werden können, da ansonsten wegen des Abbaus des organischen Silan-Anteils keine ausreichend dichte Beschichtung erzeugt werden kann.

In der DE 10 2007 010 955 A1 wird eine Beschichtungszusammensetzung offenbart, mit der korrosionsfeste Beschichtungen mit einer Temperaturstabilität bis 1000°C, insbesondere bis mindestens 800 °C erhalten werden können. Als Hauptbestandteile der Beschichtungszusammensetzung werden mindestens ein Silikat, eine Komponente mit Antihafteigenschaften (ausgewählt aus der Gruppe von Graphit, Graphitverbindungen und Metallsulfiden) sowie mindestens ein Metallcarbid genannt. Hier wird der Bereich der Betriebstemperatur bis 1.000 °C ausgedehnt. Der Schrift ist jedoch klar zu entnehmen, dass die dort vorgeschlagene Beschichtung für Betriebstemperaturen über 1.000 °C nicht geeignet ist. Weitere hochtemperaturfeste Beschichtungen auf Silikat-Basis sind offenbart in US 5 681 383 A, US 2009/081106 A, US 2005/153125 A1, US 4 559 270 A, US 4 465 777 A, US 6 165 923 A, SU 980 920 A, SU 1 629 284 A.

Es ist Aufgabe der Erfindung, ein Verfahren zur Herstellung einer extrem hochtemperaturfesten Beschichtung für ein extrem hochtemperaturfestes Bauteil vorzuschlagen mit einer Beschichtungszusammensetzung, die möglichst dünn und gleichmäßig aufgebracht werden kann. Diese Aufgabe wird gelöst mit einem Verfahren nach Anspruch 1. Mit dem erfindungsgemäßen Verfahren erhält man ein hochtemperaturbeständiges Bauteil, insbesondere ein extrem hochtemperaturfestes Bauteil, das bei einer Betriebstemperatur von mehr als 1.000 °C bis zu 2.000 °C beständig ist, mit einer extrem hochtemperaturfesten Beschichtung, die ein silikatisches Netzwerk aufweist. Silikatische oder SiO2-Netzwerke sind an sich bekannt. Beschichtungsmittel auf der Basis von Silikaten bzw. Polysilikaten sind bekannt. Wasserglas als typischer Rohstoff für diese Beschichtungsmittel ist preiswert und lässt sich zu einer Beschichtung auf zahlreichen Bauteileverarbeiten. Bereits in dieser einfachen Ausführung lassen sich extrem hochtemperaturfeste Beschichtungen erzielen, die einfach herstellbar sind.

Es ist als Vorteil Beschichtung anzusehen, dass verschiedenste extrem hochtemperaturfeste Bauteile wie Graphit, Metalle bzw. Legierungen, aber auch keramische und mineralische Werkstoffe mit der Beschichtung überzogen werden können, die ein silikatisches Netzwerk ausbildet. Die Beschichtung greift die Bauteile nicht an und ist selbst auch bei den genannten hohen Temperaturen inert gegenüber aggressiven Umgebungen, beispielsweise gegenüber saurem, alkalischem oder korrosivem Milieu.

Die Beschichtung, also der Film, der nach dem Aushärten des flüssig aufgebrachten Beschichtungsmittels entsteht, ist sehr dünn. Er weist typischerweise eine Schichtstärke oder Trockenfilmstärke von 1 µm bis 20 µm, bevorzugt eine Schichtstärke von 3 µm bis 10 µm auf. Dünnere Schichtstärken sind möglich, wenn das Auftragsverfahren besonders präzise gesteuert wird. Größere Schichtstärken sind möglich, wenn mehr Material eingesetzt wird. Allerdings wird der höhere Materialeinsatz zunehmend unwirtschaftlich und die Filmbildung wird mit stark ansteigender Schichtstärke nicht besser. Es bilden sich u. U. Risse oder das Aushärten erfolgt ungleichmäßig. Die Beschichtung ist bis 2.000 °C beständig, dass heißt, dass sie nicht nur ein Aushärten bei dieser Temperatur übersteht, sondern dass das Bauteil, auf das sie aufgetragen ist, bei Betriebstemperaturen von mehr als 1.000 °C bis zu 2.000 °C eingesetzt werden kann. Zahlreiche industrielle Produktionsverfahren setzen Arbeitstemperaturen von mehr als 1.000 °C bis 1.500 °C voraus, z. B. erfolgt das Sintern von Werkstoffen bzw. Werkstücken oft bei diesen Temperaturen. Auch das Trocknen oder Härten von Werkstücken oder die Verbrennung organischer Reststoffe in Kraftwerksöfen kann beispielsweise bei Temperaturen von 1.100 °C bis 1.300 °C erfolgen. Die Lebensdauer extrem hochtemperaturfesten Bauteilen wie z. B. von Tragplatten auf denen solche Werkstoffe oder Werkstücke in Öfen angeordnet werden oder durch Durchlauföfen transportiert werden, kann durch die Beschichtung verlängert werden, ebenso wie die Lebensdauer von Bauteilen, die in Verbrennungsöfen oder Turbinenanlagen eingesetzt werden. Auch die Lebensdauer von Katalysatoren kann durch das Auftragen des Beschichtungsmittels verlängert werden. Die Beschichtung weist Anteile eines SiO4-Netzwerks auf. Ein SiO4-Netzwerk entsteht, wenn Silane zu einem Polysiloxan aushärten. Silane weisen organische Reste auf, die bei Temperaturen von über 500 °C in der Regel nicht beständig sind, wenn nicht besondere Schutzmaßnahmen getroffen werden, wie das Aushärten unter Inertgasatmosphäre.

Obwohl also Silane, die nach der Kondensation zu Siloxanen ein SiO4-Netzwerk bilden, wenig geeignet erscheinen, eine extrem hochtemperaturfeste Beschichtung aufzubauen, erweisen sie sich für die vorliegende Beschichtung als hilfreich, weil sie das Herstellen einer dünnen und dennoch gleichmäßigen Beschichtung ermöglichen. Sie tragen mit guten Filmbildungseigenschaften nach dem Auftragen und vor dem Aushärten zu der vorstehend erwähnten, besonders dünnen und dennoch gleichmäßig starken Beschichtung bei, auch wenn sie während des Aushärtens abgebaut werden.

Neben den monomeren Silanen können auch vorhydrolysierte Oligo- oder Polymere, also Siloxane, eingesetzt werden. Voraussetzung ist lediglich, dass sie noch flüssig bzw. in Wasser oder ggf. Lösungsmittel löslich und filmbildend auf das Bauteil aufgetragen werden können, dass sie also noch nicht abschließend ausgehärtet sind. Silikatisches Netzwerk und SiO4-Netzwerk können erfindungsgemäß unter Bildung eines geschlossenen Films auf dem extrem hochtemperaturfesten Bauteil zusammen aufgebaut werden, dadurch, dass Silikate und Silane bzw. Siloxane ausgehärtet werden, auch wenn Silane bzw. Siloxane während des Aushärtens zumindest teilweise abgebaut oder zersetzt werden.

Die extrem hochtemperaturfeste Beschichtung, die mit diesem Beschichtungsmittel herstellbar ist, hält hohen Temperaturen statt, denen das Bauteil im Betriebszustand ausgesetzt ist. Das erfindungsgemäße Beschichtungsmittel ist in der Regel beständig bei Betriebstemperaturen für das beschichtete Werkstück von bis zu 2000 °C. Damit ist ein Einsatz z. B. in Verbrennungsöfen oder in Härtungsanlagen, die bei Betriebstemperaturen von mehr als 1.000 °C bis 1.500 °C betrieben werden, ohne weiteres möglich.

Öfen oder andere Anlagen, die bei derart hohen Temperaturen betrieben werden, werden aus energetischen und wirtschaftlichen Gründen möglichst kontinuierlich betrieben. Die Beschichtung verlängert die Lebensdauer von Bauteilen solcher Öfen und Anlagen beträchtlich, ohne selbst teuer oder aufwändig zu sein. Dem liegt auch die Erkenntnis zu Grunde, dass schon der einfache Überzug mit einem Silikate und Silane bzw. Siloxane enthaltenden Netzwerk, kurz einem SiO2/SiO4-Netzwerk, erhebliche Vorteile bewirkt, da schon der Schutz vor der Umgebungsatmosphäre oder der Schutz gegen Fremdstoffe, die auf die Öfen und Anlagen einwirken, ausreicht. Bei zahlreichen Bauteilen ist ein besonderer Schutz gegen mechanische Schäden oder gegen Korrosion ist nicht erforderlich, bereits das Aufbringen des erfindungsgemäßen Beschichtungsmittels bewirkt eine erhebliche Verlängerung der Lebensdauer der Bauteile. Der wirtschaftliche Vorteil, der sich ergibt, liegt auf der Hand.

Silikate, die zur Herstellung der erfindungsgemäßen Beschichtung geeignet sind, sind sämtliche wasserlöslichen Silikate bzw. Silikatverbindungen. Insbesondere geeignet sind Wassergläser, also Lithium-, Natrium- und Kaliumpolysilikate oder deren Mischungen, kolloidale Kieselsäuren, Kieselsole, Magnesium-, Calcium- und Aluminiumsilikate oder deren Mischungen, soweit diese wasserlöslich sind.

Die silikatische Komponente und das Silan oder Siloxan können ohne weiteres in Mischung gemeinsam verarbeitet werden.

Bevorzugt werden Silane eingesetzt, die Epoxy-, Merkaptan- oder Hydroxyalkylgruppen aufweisen. Aber auch Alkyl-, insbesondere Alkenylsilane sowie Methacrylsilane sind geeignet zur Herstellung des Beschichtungsmittels. Aus den vorgenannten Silanen hergestellte oligomere oder polymere Verbindungen, die Siloxane, sind ebenfalls zur Herstellung des Beschichtungsmittels geeignet. Insbesondere Trialkoxysilane sind wegen der guten Filmbildungseigenschaften zur Herstellung des extrem hochtemperaturfesten Beschichtungsmittels geeignet. Typische Silane sind γ-Glycidyloxypropyl triethoxysilan oder γ-Glycidyloxypropyltrimethoxysilan oder Mischungen von Silanen. Zur Herstellung eines Beschichtungsmittels, das beim Aushärten wenig flüchtige organische Bestandteile freisetzt, können die vorgenannten Silane bei der Herstellung des Beschichtungsmittels werksseitig teilweise zu Siloxanen vorhydrolysiert werden. Voraussetzung für die Eignung von Siloxanen zum Einsatz in dem erfindungsgemäß verwendeten Beschichtungsmittel ist es, dass die vorhydrolysierten Siloxane noch filmbildend und flüssig sind bzw. in Lösung vorliegen.

Bei dem Beschichtungsmittel wird in der Regel der Gewichts-Anteil der Silikat-Komponente größer sein als der Gewichts-Anteil der Silan/Siloxan-Komponente. Das Verhältnis Silikat: Silan bzw. Siloxan wird bevorzugt in einem Bereich von 10 : 1 bis 1,5 : 1 liegen, üblich sind Verhältnisse von Silikat zu Silan von 5:1 bis 3 : 1. Der Gewichts-Anteil von Wasser oder Lösungsmittel wird in der Regel über 50 % der gesamten Gewichts-Anteile des Beschichtungsmittels liegen. Er beträgt bis zu 90 %, üblich sind 55 % bis 80 %. Wasser wird bevorzugt, um das Beschichtungsmittel ausreichend flüssig zu machen, so dass sich schnelle eine gleichmäßige und dünne Beschichtung auf dem Bauteil ausbildet. Lösungsmittel sind auch geeignet, werden aber wegen der oft schwierigen Handhabung beim Freisetzen organischer Bestandteile nicht eingesetzt. Auch Mischungen aus Wasser und Lösungsmitteln können eingesetzt werden.

Das Beschichtungsmittel kann Additive enthalten, z. B. Stabilisatoren, Entschäumer und dergleichen.

Das Einbrennen kann entweder als separater Vorgang erfolgen. Es kann alternativ, insbesondere bei Bauteilen, die als Träger oder Fördermittel in Trocknungs-, Sinter- oder Brennöfen eingesetzt werden, in einem "Leerdurchgang" durch den jeweiligen Ofen erfolgen, sofern die Verweildauer im Ofen ausreicht, um die Beschichtung aushärten zu lassen.

Details der Erfindung werden an einem Beispiel näher erläutert:
Zur Herstellung eines Beschichtungsmittels, mit dem die extrem hochtemperaturfeste Beschichtung auf einem extrem hochtemperaturfesten Bauteil hergestellt wird, werden
10 Teile γ-Glycidyloxypropyltriethoxysilan (Feststoffgehalt: 50 %)
30 Teile Lithiumpolysilikat (Feststoffgehalt: 50 %)
60 Teile Wasser, demineralisiert
unter Rühren gemischt. Das flüssige Beschichtungsmittel wird nach einer ersten Alternative auf eine Graphitplatte aufgetragen und bei 1.100 °C zu einem 10 µm starken Film getrocknet und ausgehärtet.

Die Graphitplatte wird als Trägerplatte für Sinter-Rohlinge eingesetzt, die in einem Sinterofen bei 1.100 °C gesintert werden. Die mit dem erfindungsgemäßen Beschichtungsmittel beschichteten Trägerplatte wird in den Sinterofen eingelegt, allerdings ohne Sinter-Rohlinge zu tragen. Nach einem Sinter-Zyklus ist die Beschichtung ausgehärtet und kann danach in ihrer eigentlichen Funktion als Trägerplatte eingesetzt werden. Es liegt auf der Hand, dass diese Form der Beschichtung von Bauteilen besonders einfach und preiswert ist.

Die extrem hochtemperaturfeste Beschichtung bewirkt, dass Reststoffe, die beim Sintern von den Rohlingen bzw. Werkstücken auf die Trägerplatte fallen, nicht beim nächsten Sintervorgang auf andere Rohlinge oder Werkstücke rückübertragen werden. Die hochtemperaturbeständige Beschichtung fängt diese Reststoffe auf, ohne sie nachfolgend wieder freizusetzen.

Das vorstehend beschriebene Beschichtungsmittel wird nach einer zweiten Alternative auf Einbauten aus einer extrem hochtemperaturfesten Stahllegierung aufgetragen und innerhalb von 30 Minuten ausgehärtet, wobei die Temperatur während des Aushärtens 300 °C beträgt. Die Bauteile werden dann als Einbauten in einem Verbrennungsofen für organische Reststoffe angebracht werden, der bei einer Betriebstemperatur zwischen 1.050 °C und 1.300 °C arbeitet. Die Stahllegierung bleibt länger temperaturbeständig, weil sie durch die Beschichtung gegen Veränderungen an der Oberfläche geschützt ist, die bisher ein Erweichen des Spezialstahls zur Folge hatten.

## Patentansprüche

1. Verfahren zum Herstellen einer extrem hochtemperaturfesten Beschichtung auf einem extrem hochtemperaturfesten Bauteil mit den Schritten
- Auftragen einer flüssigen Beschichtung, aufweisend ein Silikat und ein Silan oder Siloxan auf das extrem hochtemperaturfeste Bauteil und,
- Einbrennen der Beschichtung bei Temperaturen von 300 °C bis 2.000 °C.

2. Verfahren nach Anspruch 1, **dadurch gekennzeichnet, dass** eine Beschichtung mit einer Schichtstärke von 1 µm bis 20 µm hergestellt wird.

3. Verfahren nach Anspruch 1 oder 2, **dadurch gekennzeichnet, dass** wasserlösliche Silikate, insbesondere Lithium-, Natrium- und Kaliumpolysilikate oder deren Mischungen, kolloidale Kieselsäuren, Magnesium-, Calcium- und Aluminiumsilikate oder deren Mischungen als Silikate des Beschichtungsmittels verwendet werden.

4. Verfahren nach einem der vorhergehenden Ansprüche, **dadurch gekennzeichnet, dass** dass Silane, die Epoxy-, Merkaptan- oder Hydroxyalkylgruppen aufweisen, Alkyl-, insbesondere Alkenylsilane sowie Methacrylsilane, oligomere oder polymere Siloxane oder Mischungen dieser Verbindungen zur Herstellung des Beschichtungsmittels eingesetzt werden.

## Claims

1. A method for producing an extremely high-temperature-resistant coating on an extremely high-temperature-resistant component, comprising the steps:
- applying a liquid coating comprising a silicate and a silane or siloxane to the extremely high-temperature-resistant component and,
- baking the coating at temperatures of 300 °C to 2000 °C.

2. The method according to claim 1, **characterised in that** a coating having a layer thickness of 1 µm to 20 µm is produced.

3. The method according to claim 1 or 2, **characterised in that** water-soluble silicates, in particular lithium polysilicates, sodium polysilicates and potassium polysilicates or mixtures thereof, colloidal silicic acids, magnesium silicates, calcium silicates and aluminium silicates or mixtures thereof are used as silicates of the coating agent.

4. The method according to any one of the preceding claims, **characterised in that** silanes which have epoxy, mercaptan or hydroxyalkyl groups, alkyl silanes, in particular alkenyl silanes and methacrylic silanes, oligomeric or polymeric siloxanes or mixtures of said compounds are used for producing the coating agent.

## Revendications

1. Procédé de fabrication d'un revêtement extrêmement résistant aux hautes températures sur un composant extrêmement résistant aux hautes températures comprenant les étapes consistant à
- appliquer un revêtement liquide, présentant un silicate et un silane ou un siloxane sur le composant extrêmement résistant aux hautes températures et,
- cuire le revêtement à des températures comprises entre 300 °C et 2 000 °C.

2. Procédé selon la revendication 1, **caractérisé en ce qu'**un revêtement ayant une épaisseur de couche comprise entre 1 µm et 20 µm est fabriqué.

3. Procédé selon la revendication 1 ou 2, **caractérisé en ce qu'**il est utilisé des silicates solubles dans l'eau, en particulier des polysilicates de potassium, de lithium et de sodium ou leurs mélanges, des silices colloïdales, des silicates de magnésium, de calcium et d'aluminium ou leur mélanges en tant que silicates du moyen de revêtement.

4. Procédé selon l'une des revendications précédentes, **caractérisé en ce que** les silanes présentent les groupes époxy, mercaptan ou hydroxyalkyle, des alkylesilanes en particulier des alkenylesilanes ainsi que des silanes méthacryliques, oligomères ou polymères siloxane ou des mélanges de ces composés sont utilisés pour fabriquer le moyen de revêtement.
